# EUROPÄISCHE PATENTSCHRIFT

(11) **EP 2 726 789 B1**
(45) Veröffentlichungstag und Bekanntmachung des Hinweises auf die Patenterteilung: **10.06.2020**
(21) Anmeldenummer: 12740684.1
(22) Anmeldetag: 20.06.2012
(51) Int. Cl.: F24C 7/08, F24C 15/20, G01N 21/3504, A47J 31/44, A47J 36/00, A47J 37/12, A47J 43/07

(54) **HAUSGERÄT ZUR ZUBEREITUNG VON LEBENSMITTEL SOWIE VERFAHREN ZUM BETREIBEN EINES DERARTIGEN HAUSGERÄTS**
DOMESTIC APPLIANCE FOR PREPARING FOOD, AND METHOD FOR OPERATING A DOMESTIC APPLIANCE OF THIS KIND
APPAREIL MÉNAGER POUR LA PRÉPARATION D'ALIMENTS ET PROCÉDÉ DE FONCTIONNEMENT D'UN TEL APPAREIL

(30) Priorität: 30.06.2011 ES 201131103
(43) Veröffentlichungstag der Anmeldung: 07.05.2014
(73) Patentinhaber: BSH Hausgeräte GmbH, 81739 München (DE)
(72) Erfinder: BUÑUEL MAGDALENA, Miguel Angel, E-50017 Zaragoza (ES); DE MARCOS RUIZ, Susana, E-50410 Cuarte de Huerva (Zaragoza) (ES); ESCUDERO, Ana, E-50017 Zaragoza (ES); ESTER SOLA, Francisco Javier, E-50001 Zaragoza (ES); FERREIRA, Vicente, E-50010 Zaragoza (ES); GALBAN BERNAL, Francisco Javier, E-50410 Cuarte de Huerva (Zaragoza) (ES); ONTAÑON, Ignacio, E-50010 Zaragoza (ES); PLANAS LAYUNTA, Fernando, E-50009 Zaragoza (ES); SALVADOR LACOSTA, Jose Luis, E-50193 Peñaflor (Zaragoza) (ES); SANZ NAVAL, Javier, E-44600 Alcañiz (Teruel) (ES); SANZ VICENTE, María Isabel, E-50009 Zaragoza (ES); VILLANUEVA VALERO, Beatriz, E-44500 Andorra Teruel (ES)
(86) Internationale Anmeldenummer: PCT/IB2012/053107
(87) Internationale Veröffentlichungsnummer: WO 2013/001417

(56) Entgegenhaltungen:
- DE-A1- 4 105 807
- DE-A1- 19 649 510
- DE-A1-102004 037 606
- DE-A1-102008 009 660
- DE-C1- 19 509 612
- DE-T2- 60 008 506
- FR-A1- 2 785 370
- JP-A- 62 150 686
- US-A- 4 903 685
- US-A1- 2009 252 842
- US-A1- 2010 318 230
- US-B1- 6 285 290

## Beschreibung

Die Erfindung betrifft ein Hausgerät zum Zubereiten von Lebensmitteln, welches zumindest eine Heizeinheit aufweist, mittels welcher Wärme erzeugbar ist, mit welcher das Lebensmittel bei einem Zubereitungsvorgang beaufschlagbar ist.
Des Weiteren betrifft die Erfindung ein Verfahren zum Betreiben eines Hausgeräts zum Zubereiten von Lebensmittel.

Es ist bekannt, dass bei Kochprozessen das zuzubereitende Gargut verschiedene flüchtige Verbindungen erzeugt, die unter anderem auch entzündbar, giftig oder krebserregend sind und darüber hinaus auch ungünstige organoleptische Eigenschaften aufweisen können. Derartige flüchtige Stoffe stellen daher sowohl für Personen als auch für die Umgebung Nachteiliges dar.

Es ist daher von wesentlichem Interesse, diese flüchtigen Verbindungen genau analysieren zu können.

Die chemische Struktur und die gesamte Zusammensetzung derartig erzeugter flüchtiger Verbindungen hängt von der Art des Garguts und auch davon ab, wie es zubereitet ist. Gewöhnlich wird zum Zubereiten von Gargut Fett oder Öl verwendet und dies beispielsweise in einem Frittierprozess erhitzt, wodurch sich verschiedene Probleme ergeben, wenn entsprechend hohe Temperaturen erreicht werden.

Ein wesentliches Problem stellt dabei die Verbrennung von Öl dar. Dabei können drei verschiedene Temperaturen des Öls definiert werden. Zum einen ist dies der Rauchpunkt, welcher durch die Temperatur charakterisiert wird, wenn weißer Dampf entsteht. Des Weiteren kann der Brennbarkeitspunkt charakterisiert werden. Dieser definiert sich derart, dass eine Temperatur erreicht ist, bei der die Verbrennung des Öls beginnen kann, wenn die Flamme nahe einer Gasmischung ist. Als weitere definierte Schwelle kann der Selbstentzündungspunkt genannt werden. Dieser ist bei der Temperatur gegeben, bei der sich das Gasgemisch spontan selbst entzünden kann.

Als weiteres Problem kann genannt werden, dass erhitztes Öl chemische Prozesse starten kann, welche eine thermische Degradation dieser Verbindungen und die konsequente Freilegung von verschiedenen Arten von chemischen Substanzen, von denen die meisten toxisch sind, startet.

Ein drittes Problem kann darin gesehen werden, dass chemische Prozesse sich beschleunigen, wenn das verwendete Öl für mehrere Zubereitungsvorgänge verwendet wird. Dies verursacht in besonderem Maße die oben genannten organoleptischen Eigenschaften.

Um diese drei Probleme kontrollieren zu können, ist es wesentlich, die Abläufe und Entstehung der flüchtigen Verbindungen genauer zu kennen. Jedes Fett oder Öl hat seine eigenen Werte der angesprochenen drei Punkte, dem Rauchpunkt, dem Brennbarkeitspunkt und dem Selbstentzündungspunkt. Beispielsweise treten diese drei Punkte bei Olivenöl bei Temperaturen von etwa 200°C beziehungsweise 225°C beziehungsweise 325°C auf. Es ist jedoch zu betonen, dass diese Werte auch von der Spezifikation des Olivenöls (beispielsweise Extra Virgin, Virgin ...) abhängen.

Darüber hinaus ist zu erwähnen, dass es durch Überhitzung von Speiseöl beim Zubereiten von Gargut auch zu Bränden in der Küche kommen kann. Auch aufgrund dessen ist es wesentlich, die Prozesse beim Erhitzen von Speiseöl besser und detaillierter nachvollziehen zu können, um entsprechende Vorkehrungen bei Hausgeräten zum Zubereiten von Lebensmitteln treffen zu können.

Die bereits angesprochenen chemischen Prozesse, die bei der Erhitzung von Speiseöl auftreten können, charakterisieren sich einerseits durch die Hydrolyse. Die Hydrolyse bezeichnet dabei das Aufbrechen von Triglyceriden oder Mono-Diglyceriden des Öls. Dieser Prozess verursacht darüber hinaus auch das Auftreten von Aldehyden und Ketonen mit niedrigem Molekulargewicht, welche einen großen Anteil der Familie der flüchtigen organischen Verbindungen (Volatile Organic Compounds VOC), darstellen.

Eine weitere Reaktion wird durch die Autooxidation charakterisiert. Dies ist ein Oxidationsprozess, der durch den Sauerstoff in der Luft induziert wird. Dies führt zum Auftreten von Oxiden und Peroxiden, die dann freie Radikale bilden und Radikalreaktionen in Gang bringen. Einige dieser Oxide und Peroxide treten auch in den VOC auf.

Eine dritte Reaktion ist durch die Polymerisation gegeben. Dies ist die Kombination der vorher erwähnten erzeugten Radikale, die sich dann zu Polymeren von Fettsäuren, welche die Dichte des Öls erhöhen, zusammenschließen. Sie induzieren darüber hinaus die Bildung von anderen hochtoxischen Verbindungen, wie beispielsweise polynukleare aromatische Hydrocarbonate (Polynuclear Aromatic Hydrocarbons PAH).

Während eines Zubereitungsvorgangs und dem Erhitzen von Speiseöl kann eine sehr große Anzahl derartiger flüchtiger Verbindungen, insbesondere Verbindungen der Familien von VOC und PAH, erzeugt werden.

PAHs stellen heterogene Gruppen von Verbindungen dar, die eine gemeinsame Struktur mit Benzenringen aufweisen. Diese Strukturen entstehen aufgrund der nicht vollständigen Verbrennung von organischen Matrizen und Polymerisationsreaktionen des Speiseöls. Die Anzahl dieser PAHs ist sehr hoch und einige von ihnen zeigen krebserregende, mutagene und teratogene Effekte.

Es wurde ein sprunghafter Anstieg von VOC bei erhitzten Speiseölen erkannt, wenn das Öl den Rauchpunkt erreicht

Die DE 10 2004 037 606 A1 offenbart ein Verfahren und eine Anordnung zur Bestimmung eines Verlaufs von Back- und Kochvorgängen mittels eines Gassensors auf Basis einer NH₃ und CO₂-Entwicklung während des Garprozesses.

Die DE 10 2008 009 660 A1 offenbart einen berührungslosen Garsensor, mittels dem ein Garzustand eines Garguts ermittelbar ist.

Die US 6,285,290 offenbart eine Steuerung einer Backofenpyrolyse basierend auf einer Rauchentwicklung während des Pyrolyseprozesses.

Die US 2010/0318230 A1 offenbart eine Küchenablufthaube und ein Lüftungssystem zur optimalen Belüftung einer Küche und eines benachbarten Speiseraums.

Die DE 41 05 807 A1 offenbart eine Schaltungsanordnung zum Ein- und Ausschalten eines Lüfters einer Dunstabzugshaube mittels eines wasserdampfbasierten IR-Detektors.

Die FR 2 785 370 A1 offenbart eine Vorrichtung und ein Verfahren zur Behandlung von Luft, welche eine Isolierung mittels eines Luftvorhangs durchführt.

Die US 2009/0252842 A1 offenbart eine Vorrichtung, Systeme und Verfahren zum Verlängern einer Nutzbarkeitsdauer eines Lebensmittelbehandlungsmediums durch Hemmen seiner Degradation.

Es ist Aufgabe der vorliegenden Erfindung, ein Hausgerät zum Zubereiten von Lebensmitteln als auch ein Verfahren zum Betreiben eines derartigen Hausgerätes zu schaffen, mit welchem das Zubereiten von Gargut verbessert wird und darüber hinaus eine Information des Nutzers über chemische Stoffe erlaubt.

Diese Aufgabe wird durch ein Hausgerät sowie ein Verfahren gemäß den unabhänigen Ansprüchen gelöst.

Ein erfindungsgemäßes Hausgerät zum Zubereiten von Lebensmittel umfasst zumindest eine Heizeinheit. Mit der Heizeinheit ist Wärme erzeugbar, mit welcher das Lebensmittel bei einem Zubereitungsvorgang beaufschlagbar ist und somit zubereitbar ist.
Das Hausgerät umfasst zumindest eine Detektoreinrichtung, mit welcher bei einem Zubereitungsvorgang des Lebensmittels aufgrund der Erhitzung eines Mediums erst entstehende chemische Stoffe detektierbar sind. Es wird also eine Detektoreinrichtung geschaffen, die chemische Stoffe detektieren kann, die erst während des Zubereitungsvorgangs entstehen bzw. auftreten und somit auch erst dann detektierbar sind. Diese chemischen Stoffe treten auch nur bei ganz spezifischen Bedingungen auf, nämlich bei Erhitzen eines bei der Zubereitung des Lebensmittels verwendeten zur Zubereitung zugegebenem Mediums.
Durch eine derartige Ausgestaltung eines Hausgerätes kann ein Zubereitungsvorgang eines Lebensmittel wesentlich verbessert werden und darüber hinaus eine unerwünschte Geruchsbildung beim Zubereitungsvorgang vermieden werden.

Das Hausgerät und insbesondere die Detektoreinrichtung weist auch eine Anzeige auf, auf welcher die detektierten Substanzen, insbesondere in Art und/oder Menge, angezeigt werden. Es ist vorgesehen, dass die Detektoreinrichtung zumindest einen optischen Sensor aufweist, welcher zur Erfassung einer optischen Eigenschaft eines chemischen Stoffs ausgebildet ist, wobei abhängig von dieser optischen Eigenschaft die Art des Stoffs durch die Detektoreinrichtung feststellbar ist. Die Detektoreinrichtung ist somit auf optischer Basis arbeitend dahingehend ausgebildet, das sie grundsätzlich das Auftreten derartiger chemischer Stoffe detektieren kann und darüber hinaus auch noch genau die Art des Stoffes und somit seine Charakterisierung durchführen kann.

Es ist vorgesehen, dass der optische Sensor zur Aussendung von elektromagnetischer Strahlung in einem spezifischen Wellenlängenintervall ausgebildet ist und abhängig von der empfangenen optischen Strahlung die optische Eigenschaft des bei der Erhitzung des Mediums entstehenden weiteren Mediums ermittelbar ist.

Insbesondere kann somit beispielsweise durch Ausstrahlung von Licht in einem spezifischen Wellenlängenbereich und Empfangen von Licht, welches von den chemischen Stoffen reflektiert oder insbesondere absorbiert und dann wiederum Licht in einem anderen Wellenlängenbereich emittiert wird, eine Stoffdetektion erfolgen. Aufgrund dieses Reflektionsverhaltens und/oder Absorptionsverhaltens des bei der Erhitzung des Mediums entstehenden weiteren Mediums können die dabei entstandenen chemischen Stoffe dieses weiteren Mediums genau analysiert werden, was durch die Detektoreinrichtung ermöglicht ist. Es kann somit das Absorptionsverhalten von elektrischmagnetischer Strahlung dieses entstandenen Mediums, was Dampf bzw. Wrasen ist, ermöglicht werden.

Durch die Detektoreinrichtung wird somit eine sehr genaue Analyse ermöglicht, wann und in welchem Umfang und vor allen Dingen auch welche derartigen chemischen Stoffe in diesem Dampf bzw. im Wrasen auftreten.

Die optische Eigenschaft ist somit das Absorptionsverhalten eines bei einem Zubereitungsvorgang erzeugten weiteren Mediums.

In besonders vorteilhafter Weise ist vorgesehen, dass die Detektoreinrichtung zur Erfassung und Auswertung eines chemischen Stoffs ausgebildet ist, der eine flüchtige organische chemische Verbindung darstellt. Insbesondere entsteht eine derartige flüchtige organische Verbindung beim Erhitzen eines Speiseöls und/oder eines Bratfetts.

Besonders vorteilhaft ist es, dass die Detektoreinrichtung zur Erfassung von bei dem Erhitzen eines Speiseöls und/oder eines Bratfetts entstehenden Aldehyden und/oder Ketonen und/oder Oxiden ausgebildet ist. Insbesondere können diese spezifischen organischen Verbindungen gesättigt oder einfach oder zweifach ungesättigt sein. Da, wie bereits eingangs erläutert, diese spezifischen flüchtigen organischen Verbindungen krebserregend sein können oder anderweitige oben genannte Nachteile aufweisen, ist es von besonderer Vorteilhaftigkeit, das diese schnell und genau detektiert werden können.

Vorzugsweise ist vorgesehen, dass die Anzeige optisch und/oder akustisch unterstützt ist und gerade dann kann, wenn derartige Stoffe detektiert werden und/oder eine gewisse Schwellwertkonzentration überschritten ist, ein Warnhinweis an den Nutzer ausgegeben wird.

Es kann auch vorgesehen sein, das ein chemischer Stoff ein polynukleares aromatisches Hydrokarbonat ist. Auch hierzu sind die bereits oben genannten Nachteile angegeben, sodass es von besonderer Bedeutung ist, auch diese schnell und umfassend analysieren zu können.

Vorzugsweise ist vorgesehen, dass die Detektoreinrichtung zur Bestimmung eines bei dem Zubereitungsvorgang entstehenden unerwünschten Geruchs ausgebildet ist. Auch dies kann anhand von Sensoren, die abhängig von den jeweils detektierten Stoffen und/oder deren Konzentration funktionieren, wodurch dann die entsprechenden Gerüche definiert und charakterisiert sind, erfolgen.

Vorzugsweise ist diese Geruchsbestimmung abhängig von der Art und/oder der Konzentration von Stoffen, wie sie bei einem Zubereitungsvorgang abhängig von den zuzubereitenden Lebensmitteln und/oder den Zubereitungsbeigaben auftreten, definiert.

Zubereitungsbeigaben bzw. Medien können hierbei insbesondere spezifische Öle und/oder Fette sein.

Vorzugsweise ist vorgesehen, dass die Detektoreinrichtung zumindest mit einem Sensor ausgebildet ist, der an einer Dunstabzugshaube des Hausgerätes angeordnet ist.

Die Detektoreinrichtung umfasst insbesondere auch eine Steuer- und/oder Auswerteinheit, mittels welcher Informationen des zumindest einen Sensors verarbeitet werden können und darüber hinaus dann auch beispielsweise weiter Informationen einem Nutzer ausgegeben werden können und/oder automatisch Steuerungen erfolgen können, wie beispielsweise die Reduzierung der Temperaturabgabe der Heizeinheit.

Vorzugsweise ist vorgesehen, dass das Hausgerät ein Backofen oder ein Kochfeld oder ein Mikrowellengargerät oder ein Dampfgargerät ist.

Es kann auch vorgesehen sein, dass das Hausgerät ein anderweitiges Gerät zum Zubereiten von Lebensmitteln ist, beispielsweise ein Kaffeevollautomat oder ein Mixer oder der Gleichen.

Insbesondere kann das Hausgerät jedoch auch eine Friteuse oder der Gleichen sein.

Des weiteren betrifft die Erfindung ein Verfahren zum Betreiben eines Hausgeräts zum Zubereiten von Lebensmittel, welches zumindest eine Heizeinheit aufweist, mittels welcher Wärme erzeugt wird. Das Lebensmittel wird mit der erzeugten Wärme beim Zubereitungsvorgang beaufschlagt. Das Hausgerät umfasst darüber hinaus eine Detektoreinrichtung, mit welcher bei einem Zubereitungsvorgang aufgrund der Erhitzung eines Mediums erst entstehende chemische Stoffe detektiert werden.

Vorteilhafte Ausführungen des erfindungsgemäßen Hausgerätes sind als vorteilhafte Ausführungen des erfindungsgemäßen Verfahrens anzusehen, wobei die spezifischen chemischen Stoffe auf Grund von deren optischen Eigenschaften, insbesondere im Absorptionsverhalten, detektiert werden. Insbesondere wird während eines Zubereitungsvorgangs eine Zubereitungsbeigabe in Form von beispielsweise einem Speiseöl und/oder einem Bratfett als Medium erhitz und das bei der Erhitzung entstehende weitere Medium, beispielsweise Wrasen oder Dampf, weist dann die entstandenen chemischen Stoffe auf.

Des Weiteren betrifft die Erfindung eine Hausgeräteanordung mit einem Hausgerät. Dieses erste Hausgerät ist durch Erhitzung des Mediums zur Erzeugung eines einen entstehenden chemischen Stoff aufweisenden weiteren Mediums ausgebildet. Die Hausgeräteanordnung umfasst zumindest ein weiteres Gerät, welches in der Strömung des weiteren Mediums angeordnet ist und die Detektoreinrichtung aufweist.

Vorzugsweise ist vorgesehen, dass das weitere Gerät eine Dunstabzugshaube ist, welche beabstandet oberhalb eines Hausgerätes zur Zubereitung von Lebensmittel angeordnet ist, wobei an dieser Dunstabzugshaube zumindest ein Sensor der Detektoreinrichtung angeordnet ist.

Ein Ausführungsbeispiel der Erfindung wird nachfolgend anhand einer schematischen Zeichnung näher erläutert. Die Fig. zeigt eine Hausgeräteanordnung 1, welche einen Backofen 2 und eine darüber angeordnete Dunstabzugshaube 3 aufweist. Der Backofen 2 umfasst anhand seiner Position beispielhaft, vier Kochzonen 4, 5, 6 und 7, wobei auf der Kochzone 5 beispielhaft eine Pfanne 8 aufgestellt ist. In der Pfanne 8 ist ein Lebensmittel als Gargut, beispielsweise ein Fleischstück 9, angeordnet. Darüber hinaus ist in die Pfanne 8 eine Zubereitungsbeigabe in Form eines Mediums 10, wie beispielsweise eines Speiseöls oder eines Bratfetts eingebracht.

In der Dunstabzugshaube 3 ist darüber hinaus zumindest ein Sensor 11 angeordnet, der einer Detektoreinrichtung 12 zugehörig ist. Sowohl die Anzahl als auch die Position des Sensors 11 also auch der Detektoreinrichtung 12 ist lediglich beispielhaft.

Die Detektoreinrichtung 12 kann darüber hinaus auch noch eine Steuer- und/oder Auswerteeinheit 13 aufweisen.

Zumindest die Steuer- und/oder Auswerteinheit 13 kann auch im Backofen 2 angeordnet sein und insbesondere zur drahtlosen Kommunikation mit dem zumindest einen Sensor 11 vorgesehen sein.

Der Sensor 11 ist also optischer chemischer Sensor bezeichnet. Dies bedeutet, er ist zur Erfassung von optischen Eigenschaften von chemischen Stoffen ausgebildet.

Wird bei einem Zubereitungsvorgang die Kochzone 5 durch eine in der Fig. nicht zu erkennende, unter einer Kochfeldplatte 14 angeordnete Heizeinheit erhitzt, wird auch die Pfanne 8 erhitzt und somit auch das Medium 10 erhitzt. Aufgrund dieser Erhitzung entsteht ein weiteres Medium 15, welches Dampf oder Wrasen ist.

Aufgrund der Erhitzung des spezifischen Mediums 10, nämlich Speiseöl oder Bratfett, entstehen aufgrund deren Zusammensetzung flüchtige organische Verbindungen als chemische Stoffe, beispielsweise Aldehyde und/oder Ketone und/oder Oxide, die insbesondere gesättigt oder einfach oder zweifach ungesättigt sein können. Darüber hinaus können auch noch polynukleare aromatische Hydrokarbonate als chemische Stoffe bei dem Zubereitungsvorgang und dem Erhitzen des Mediums 10 entstehen.

Da diese Stoffe sowohl im Hinblick auf eine unerwünschte Geruchsbildung als auch im Hinblick auf einen suboptimalen Zubereitungsvorgang des Fleichstückes 9 unerwünscht sind, gilt es, diese frühzeitig in Art und/oder im Hinblick auf die Menge bzw. Konzentration erfassen zu können, um dann den Nutzer der Hausgeräteanordnung 1 informieren oder warnen zu können und/oder den Zubereitungsvorgang so steuern zu können, dass diese Bildung der unerwünschten chemischen Stoffe im weiteren dann vermieden wird oder einen Schwellwert nicht überschreitet.

Der zumindest eine Sensor 11 ist dabei zu Erfassung einer optischen Eigenschaft der in dem weiteren Medium 15 enthaltenen chemischen Stoffe ausgebildet. Insbesondere das optische Absorptionsverhalten von elektromagnetischer Strahlung ist dabei auswertbar detektierbar.

So kann vorgesehen sein, dass der Sensor 11 Licht bzw. Strahlung in einem spezifischen Wellenlängenintervall oder mit einer spezifischen Wellenlänge aussenden kann und abhängig von optischen Eigenschaften der chemischen Stoffe in dem weiteren Medium 15 wird diese Strahlung dann reflektiert und/oder absorbiert und bei der Absorption dann wiederum anderweitig elektromagnetische Strahlung ausgesendet, die durch den Sensor 11 erfasst werden kann. Die dann erfassten Informationen können über die Steuerund/oder Auswerteeinheit 13 ausgewertet werden und abhängig davon dann auf die beim Zubereitungsvorgang und somit dem Erhitzen des Mediums 10 entstandenen chemischen Stoffe, nämlich auf die oben genannten spezifischen unerwünschten Stoffe im Hinblick auf Art und/oder Konzentration rückgeschlossen werden.

Insbesondere kann vorgesehen sein, das derartige Konzentrationsschwellwerte, die dann Einfluss auf eine unerwünschte Geruchsbildung und/oder einen nachteiligen Zubereitungsvorgang des Fleischstücks 9 aufweisen, grundlegend durch vorherige Probeversuche in Analyseszenarien ermittelt werden und dann eine entsprechende Kalibrierung vorgenommen wird. Aufbauend auf diesen Informationen und den dann zugrunde gelegten Schwellwerten, die dann vorzugsweise in der Steuer- und/oder Auswerteeinheit 13 abgespeichert sind, kann dann die Auswertung erfolgen, wobei dazu insbesondere auch ein Vergleich der durch den Sensor 11 erfassten Informationen mit den abgespeicherten Referenzinformation erfolgt.

### Bezugszeichenliste

- 1: Hausgeräteanordnung
- 2: Backofen
- 3: Dunstabzugshaube
- 4,5,6,7: Kochzonen
- 8: Pfanne
- 9: Fleischstück
- 10: Zubereitungsbeigabe bzw. Medium
- 11: Sensor
- 12: Detektoreinrichtung
- 13: Steuer und/oder Auswerteeinheit
- 14: Kochfeldplatte
- 15: weiteres Medium

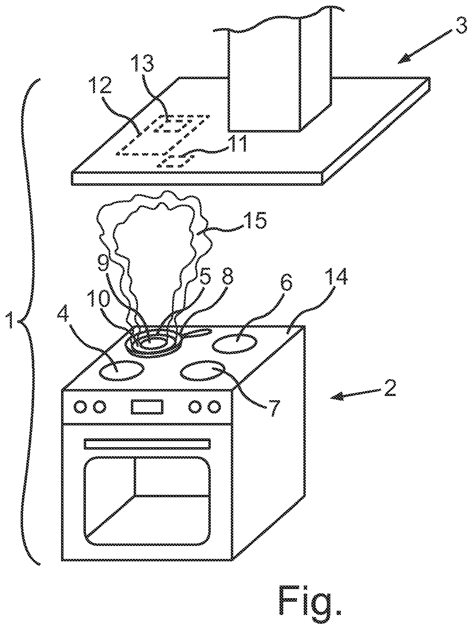

## Patentansprüche

1. Hausgerät (2) zum Zubereiten von Lebensmitteln, welches zumindest eine Heizeinheit aufweist, mittels welcher Wärme erzeugbar ist, mit welcher das Lebensmittel (9) bei einem Zubereitungsvorgang beaufschlagbar ist, wobei das Hausgerät (2) zumindest eine Detektoreinrichtung (12) umfasst, mit welcher bei einem Zubereitungsvorgang aufgrund der Erhitzung eines Mediums (10) entstehende chemische Stoffe detektierbar sind, wobei die Detektoreinrichtung (12) zumindest einen optischen Sensor (11) aufweist, welcher zur Erfassung einer optischen Eigenschaft eines chemischen Stoffs ausgebildet ist, und abhängig von dieser optischen Eigenschaft die Art des Stoffs durch die Detektoreinrichtung (12) feststellbar ist, insbesondere der Sensor (11) zur Aussendung von elektromagnetischer Strahlung in einem spezifischen Wellenlängeintervall ausgebildet ist und abhängig von der empfangenen Strahlung die optische Eigenschaft ermittelbar ist, **dadurch gekennzeichnet, dass** das Hausgerät (2) eine Anzeige aufweist, die die detektierten Substanzen anzeigt, wobei die optische Eigenschaft das Absorptionsverhalten eines chemischen Stoffs eines bei dem Zubereitungsvorgang erzeugten weiteren Mediums (15) ist, wobei das Medium (15) Dampf und/oder Wrasen ist.

2. Hausgerät (2) nach Anspruch 1, **dadurch gekennzeichnet, dass** ein chemischer Stoff eine flüchtige organische Verbindung ist, die beim Erhitzen eines Speiseöls und/oder Bratfetts erzeugt wird, insbesondere die flüchtige organische Verbindung ein Aldehyd und/oder ein Keton und/oder Oxid, insbesondere gesättigt oder einfach oder zweifach ungesättigt, ist.

3. Hausgerät (2) nach einem der vorhergehenden Ansprüche, **dadurch gekennzeichnet, dass** ein chemischer Stoff ein polynukleares aromatisches Hydrokarbonat ist.

4. Hausgerät (2) nach einem der vorhergehenden Ansprüche, **dadurch gekennzeichnet, dass** die Detektoreineinrichtung (12) zur Bestimmung eines beim Zubereitungsvorgang entstehenden unerwünschten Geruchs ausgebildet ist, wobei insbesondere ein unerwünschter Geruch durch in der Detektoreinrichtung (12) abgespeicherte Referenz-Schwellwerte der Art und/oder Konzentration der Stoffe definiert ist.

5. Hausgerät (2) nach Anspruch 4, **dadurch gekennzeichnet, dass** der Geruch abhängig von der Art und/oder der Konzentration von Stoffen, wie sie bei einem Zubereitungsvorgang abhängig von dem zuzubereiten Lebensmittel und/oder dem Zubereitungsbeigaben auftreten, definiert ist.

6. Hausgerät nach einem der vorhergehenden Ansprüche, **dadurch gekennzeichnet, dass** es ein Backofen (2) oder ein Kochfeld oder ein Mikrowellengargerät oder ein Dampfgargerät oder eine Friteuse ist.

7. Hausgerät nach einem der vorhergehenden Ansprüche, **dadurch gekennzeichnet, dass** die Anzeige die detektierten Substanzen in Art und/oder Menge anzeigt.

8. Hausgerät nach einem der vorhergehenden Ansprüche, **dadurch gekennzeichnet, dass** die Anzeige abhängig von der Detektion der Substanzen und/oder einer Überschreitung einer Schwellwertkonzentration zur Ausgabe eines Warnhinweises optisch und/oder akustisch unterstützt ist.

9. Hausgeräteanordnung (1) mit einem Hausgerät (2) zum Zubereiten von Lebensmitteln (9), welches zumindest eine Heizeinheit aufweist, mittels welcher Wärme erzeugbar ist, mit welcher das Lebensmittel (9) bei einem Zubereitungsvorgang beaufschlagbar ist, wobei die Hausgeräteanordnung (1) ein weiteres Gerät (3) aufweist, welches zumindest eine Detektoreinrichtung (12) umfasst, mit welcher bei einem Zubereitungsvorgang aufgrund der Erhitzung eines Mediums (10) entstehende chemische Stoffe detektierbar sind, **dadurch gekennzeichnet, dass** das Hausgerät (2) nach einem der vorhergehenden Ansprüche ausgebildet ist.

10. Hausgeräteanordnung (1) nach Anspruch 9, **dadurch gekennzeichnet, dass** das Hausgerät (2) durch Erhitzung des Mediums (10) zur Erzeugung eines die entstehenden chemischen Stoffe aufweisenden weiteren Mediums (15) ausgebildet ist, und das weitere Gerät (3) in der Strömung des weiteren Mediums (15) angeordnet ist.

11. Hausgeräteanordnung nach Anspruch 9 oder 10, **dadurch gekennzeichnet, dass** das weitere Gerät eine Dunstabzugshaube (3) ist, an welcher zumindest ein Sensor (11) der Detektoreinrichtung (12) angeordnet ist.

12. Verfahren zum Betreiben einer Hausgeräteanordnung (1) mit einem Hausgerät (2) zum Zubereiten von Lebensmitteln (9), welches zumindest eine Heizeinheit aufweist, mittels welcher Wärme erzeugbar wird, mit welcher das Lebensmittel (9) bei einem Zubereitungsvorgang beaufschlagt wird, wobei die Hausgeräteanordnung (1) ein weiteres Gerät (3) aufweist, welches zumindest eine Detektoreinrichtung (12) umfasst, mit welcher bei einem Zubereitungsvorgang aufgrund der Erhitzung eines Mediums (10) entstehende chemische Stoffe detektiert und mittels einer Anzeige des Hausgeräts (2) die detektierten Substanzen angezeigt werden, wobei die Detektoreinrichtung (12) zumindest einen optischen Sensor (11) aufweist, mittels welchem eine optische Eigenschaft eines chemischen Stoffs erfasst wird, und abhängig von dieser optischen Eigenschaft die Art des Stoffs durch die Detektoreinrichtung (12) festgestellt wird, insbesondere der Sensor (11) elektromagnetische Strahlung in einem spezifischen Wellenlängenintervall aussendet und abhängig von der empfangenen Strahlung die optische Eigenschaft ermittelt wird, wobei die optische Eigenschaft das Absorptionsverhalten eines chemischen Stoffs eines bei dem Zubereitungsvorgang erzeugten weiteren Mediums (15) ist, wobei das Medium (15) Dampf und/oder Wrasen ist.

## Claims

1. A household appliance (2) for preparing food, which has at least one heating unit, by means of which heat can be generated and can be applied to the food (9) during a preparation procedure, wherein the household appliance (2) comprises at least one detector device (12), with which chemical substances which develop during a preparation procedure on account of a medium being heated can be detected, wherein the detector device (12) has at least one optical sensor (11) which is embodied to detect an optical property of a chemical substance and as a function of this optical property the type of substance can be defined by the detector device (12), in particular the sensor (11) is embodied to emit electromagnetic radiation in a specific wavelength interval and as a function of the received radiation the optical property can be determined, **characterized in that** the household appliance (2) has a display which indicates the detected substances, wherein the optical property is the absorption behavior of a chemical substance of a further medium (15) generated during the preparation procedure, wherein the medium (15) is steam and/or vapor.

2. The household appliance (2) as claimed in claim 1, **characterized in that** a chemical substance is a volatile organic compound, which is generated when a cooking oil and/or frying oil is heated, in particular the volatile organic compound is an aldehyde and/or a ketone and/or oxide, in particular saturated or monounsaturated or polyunsaturated.

3. The household appliance (2) as claimed in one of the preceding claims, **characterized in that** a chemical substance is a polynuclear aromatic hydrocarbon.

4. The household appliance (2) as claimed in one of the preceding claims, **characterized in that** the detector device (12) is embodied to determine an unwanted odor developing during the preparation procedure, wherein in particular an unwanted odor is defined by reference threshold values of the type and/or concentration of the substance stored in the detector device (12).

5. The household appliance (2) as claimed in claim 4, **characterized in that** the odor is defined as a function of the type and/or the concentration of substances occurring during a preparation procedure as a function of the food to be prepared and/or the preparation admixtures.

6. The household appliance as claimed in one of the preceding claims, **characterized in that** it is an oven (2) or a stovetop or a microwave cooking appliance or a steam cooking appliance or a deep fryer.

7. The household appliance as claimed in one of the preceding claims, **characterized in that** the display indicates the type and/or quantity of the detected substances.

8. The household appliance as claimed in one of the preceding claims, **characterized in that** the display is optically and/or acoustically assisted to output a warning message as a function of the detection of substances and/or a threshold value concentration being exceeded.

9. A household appliance arrangement (1) with a household appliance (2) for preparing food (9), which has at least one heating unit, by means of which heat can be generated and can be applied to the food (9) during a preparation procedure, wherein the household appliance arrangement (1) has a further appliance (3) which comprises at least one detector device (12), with which, during a preparation procedure, chemical substances which develop during a preparation procedure on account of a medium (10) being heated can be detected, **characterized in that** the household appliance (2) is embodied as claimed in one of the preceding claims.

10. The household appliance arrangement (1) as claimed in claim 9, **characterized in that** the household appliance (2) is designed, by heating the medium (10), to generate a further medium (15) having the developing chemical substances, and the further device (3) is arranged in the flow of the further medium (15).

11. The household appliance arrangement as claimed in claim 9 or 10, **characterized in that** the further appliance is an extractor hood (3), on which at least one sensor (11) of the detector device (12) is arranged.

12. A method for operating a household appliance arrangement (1) with a household appliance (2) for preparing food (9), which has at least one heating unit, by means of which heat can be generated and can be applied to the food (9) during a preparation procedure, wherein the household appliance arrangement (1) has a further appliance (3), which comprises at least one detector device (12), with which chemical substances which develop during a preparation procedure on account of a medium (10) being heated are detected and the detected substances are indicated by means of a display of the household appliance (2), wherein the detector device (12) has at least one optical sensor (11), by means of which an optical property of a chemical substance is detected, and as a function of this optical property, the type of substance is defined by the detector device (12), in particular the sensor (11) emits electromagnetic radiation in a specific wavelength interval and as a function of the received radiation the optical property is determined, wherein the optical property is the absorption behavior of a chemical substance of a further medium (15) produced during the preparation procedure, wherein the medium (15) is steam and/or vapor.

## Revendications

1. Appareil ménager (2) destiné à la préparation d'aliments, lequel présente au moins une unité de chauffage au moyen de laquelle de la chaleur peut être produite, avec laquelle l'aliment (9) peut être alimenté lors d'une opération de préparation, l'appareil ménager (2) comprenant au moins un dispositif de détection (12) à l'aide duquel des substances chimiques se produisant en raison de réchauffement d'un milieu (10) lors d'une opération de préparation sont détectables, le dispositif de détection (12) présentant au moins un capteur (11) optique lequel est réalisé pour détecter une propriété optique d'une substance chimique, et le type de substance pouvant être constaté par le dispositif de détection (12) en fonction de cette propriété optique, notamment le capteur (11) étant réalisé pour émettre un rayonnement électromagnétique dans un intervalle de longueur d'onde spécifique, et la propriété optique étant déterminable en fonction du rayonnement reçu, **caractérisé en ce que** l'appareil ménager (2) présente un affichage qui indique les substances détectées, la propriété optique étant le comportement d'absorption d'une substance chimique d'un milieu (15) supplémentaire généré lors de l'opération de préparation, le milieu (15) étant de la vapeur et/ou de la buée.

2. Appareil ménager (2) selon la revendication 1, **caractérisé en ce qu'**une substance chimique est une liaison organique volatile qui est générée lors de réchauffement d'une huile alimentaire et/ou d'une graisse de cuisson, notamment la liaison organique volatile étant un aldéhyde et/ou une cétone et/ou un oxyde, notamment saturés ou insaturés ou di-insaturés.

3. Appareil ménager (2) selon l'une quelconque des revendications précédentes, **caractérisé en ce qu'**une substance chimique est un hydrocarbonate aromatique polynucléaire.

4. Appareil ménager (2) selon l'une quelconque des revendications précédentes, **caractérisé en ce que** le dispositif de détection (12) est réalisé pour déterminer une odeur non désirée se produisant lors de l'opération de préparation, notamment une odeur non désirée étant définie par des valeurs seuil de référence, mémorisées dans le dispositif de détection (12), du type et/ou de la concentration des substances.

5. Appareil ménager (2) selon la revendication 4, **caractérisé en ce que** l'odeur est définie en fonction du type et/ou de la concentration de substances, tels qu'ils se manifestent lors d'une opération de préparation en fonction de l'aliment préparé et/ou des compléments à la préparation.

6. Appareil ménager selon l'une quelconque des revendications précédentes, **caractérisé en ce qu'**il est un four (2) ou une table de cuisson ou un appareil de cuisson à microondes ou un appareil de cuisson à vapeur ou une friteuse.

7. Appareil ménager selon l'une quelconque des revendications précédentes, **caractérisé en ce que** l'affichage indique les substances détectées quant au type et/ou à la quantité.

8. Appareil ménager selon l'une quelconque des revendications précédentes, **caractérisé en ce que** l'affichage est supporté optiquement et/ou acoustiquement pour sortir un message d'avertissement en fonction de la détection des substances et/ou d'un dépassement d'une concentration de valeur seuil.

9. Agencement d'appareil ménager (1) comprenant un appareil ménager (2) destiné à la préparation d'aliments (9), lequel présente au moins une unité de chauffage au moyen de laquelle de la chaleur peut être produite, avec laquelle l'aliment (9) peut être alimenté lors d'une opération de préparation, l'agencement d'appareil ménager (1) présentant un appareil supplémentaire (3) lequel comprend au moins un dispositif de détection (12) à l'aide duquel des substances chimiques se produisant en raison de réchauffement d'un milieu (10) lors d'une opération de préparation sont détectables, **caractérisé en ce que** l'appareil ménager (2) est réalisé selon l'une quelconque des revendications précédentes.

10. Agencement d'appareil ménager (1) selon la revendication 9, **caractérisé en ce que** l'appareil ménager (2) est réalisé pour générer un milieu (15) supplémentaire présentant les substances chimiques se produisant en raison de réchauffement du milieu (10), et **en ce que** l'appareil supplémentaire (3) est disposé dans le flux du milieu supplémentaire (15).

11. Agencement d'appareil ménager selon la revendication 9 ou 10, **caractérisé en ce que** l'appareil supplémentaire est une hotte aspirante (3) sur laquelle est disposé au moins un capteur (11) du dispositif de détection (12).

12. Procédé de fonctionnement d'un agencement d'appareil ménager (1) comprenant un appareil ménager (2) destiné à la préparation d'aliments (9), lequel présente au moins une unité de chauffage au moyen de laquelle de la chaleur peut être produite, avec laquelle l'aliment (9) peut être alimenté lors d'une opération de préparation, l'agencement d'appareil ménager (1) présentant un appareil supplémentaire (3) lequel comprend au moins un dispositif de détection (12) à l'aide duquel des substances chimiques se produisant en raison de l'échauffement d'un milieu (10) lors d'une opération de préparation sont détectées et les substances détectées sont affichées au moyen d'un affichage de l'appareil ménager (2), le dispositif de détection (12) présentant au moins un capteur (11) optique au moyen duquel une propriété optique d'une substance chimique est détectée, et le type de substance étant constaté par le dispositif de détection (12) en fonction de cette propriété optique, notamment le capteur (11) émettant un rayonnement électromagnétique dans un intervalle de longueur d'onde spécifique, et la propriété optique étant déterminée en fonction du rayonnement reçu, la propriété optique étant le comportement d'absorption d'une substance chimique d'un milieu (15) supplémentaire généré lors de l'opération de préparation, le milieu (15) étant de la vapeur et/ou de la buée.
